# EUROPEAN PATENT SPECIFICATION

(11) **EP 3 178 723 B1**
(45) Date of publication and mention of the grant of the patent: **27.03.2019**
(21) Application number: 15199442.3
(22) Date of filing: 10.12.2015
(51) Int. Cl.: B62D 1/184, B62D 1/187

(54) **STEERING COLUMN FOR VEHICLES**
LENKSÄULE FÜR FAHRZEUGE
COLONNE DE DIRECTION POUR VÉHICULES

(43) Date of publication of application: 14.06.2017
(73) Proprietor: A.M.A. S.p.A., 42018 San Martino in Rio (IT)
(72) Inventor: CAMPANA, Daniele, 42018 SAN MARTINO IN RIO (IT)
(74) Representative: Manconi, Stefano

(56) References cited:
- EP-A1- 2 377 741
- EP-A2- 1 923 297
- US-A- 4 793 204

## Description

The present invention relates to a steering column for vehicles.

In particular, the present invention relates to a steering column for vehicles of the type comprising a lower shaft configured to be connected to a chassis of a vehicle; an intermediate shaft, slidingly coupled to the lower shaft to move along a longitudinal axis of the lower shaft; and an upper shaft, which supports a steering wheel of the vehicle and is rotatably coupled to the intermediate shaft to rotate around a rotation axis.

The steering column further comprises a first locking device to lock the intermediate shaft along said longitudinal axis; and a second locking device to lock the upper shaft about said rotation axis.

Generally, the first locking device comprises a braking member, which is carried by the intermediate shaft and is mobile between a locking position and a release position of the lower shaft.

The second locking device usually comprises a first and a second toothed sector, wherein the first toothed sector is fixed to the upper shaft and the second toothed sector is carried by the intermediate shaft. The second locking device is mobile between a locking position, in which the two toothed sectors are coupled, and a release position, in which the two toothed sectors are uncoupled.

The steering column further comprises a release crank hinged to the intermediate shaft close to the steering wheel.

The operator manually moves the release crank between a rest position, a first release position, in which the release crank engages the second toothed segment to move it in its release position, and a second release position, in which the release crank engages the braking member to move it in its release position.

Since the rest position is arranged between the two release positions, the displacements of the release crank from the rest position in the two release positions involve two movements of the release crank in two opposite forward directions, namely downwards and upwards.

The steering columns of the aforesaid known type have some drawbacks mainly deriving from the fact that the release crank can be only manually operated by the operator, and not also by means of an operating pedal coupled to the release crank through a traction cable like, for example, a Bowden cable.

The operating pedal and the traction cable would, in fact, be able to move the release crank only downwards and in one of the two release positions, whereas they would be unable to move the release crank upwards and in the other release position. Furthermore, document EP 1923297 A2 is seen as the closest prior art and shows the preamble of claim 1.

The object of the present invention is to provide a steering column for vehicles which is free from the aforesaid drawbacks and which is simple and inexpensive to implement.

Therefore, the present invention provides a steering column for vehicles as claimed in the appended claims.

The present invention will now be described with reference to the accompanying drawings showing a non-limitative embodiment, in which:
Figure 1 is a schematic perspective view, with parts removed for clarity's sake, of a preferred embodiment of the steering column of the present invention;
Figure 2 is a schematic side view, with parts removed for clarity's sake, of the steering column of Figure 1;
Figure 3 is a schematic perspective view of a first detail of the steering column of Figures 1 and 2;
Figure 4 is a schematic side view of a second detail of the steering column of Figures 1 and 2; and
Figure 5 is a schematic perspective view of a third detail of the steering column of Figures 1 and 2.

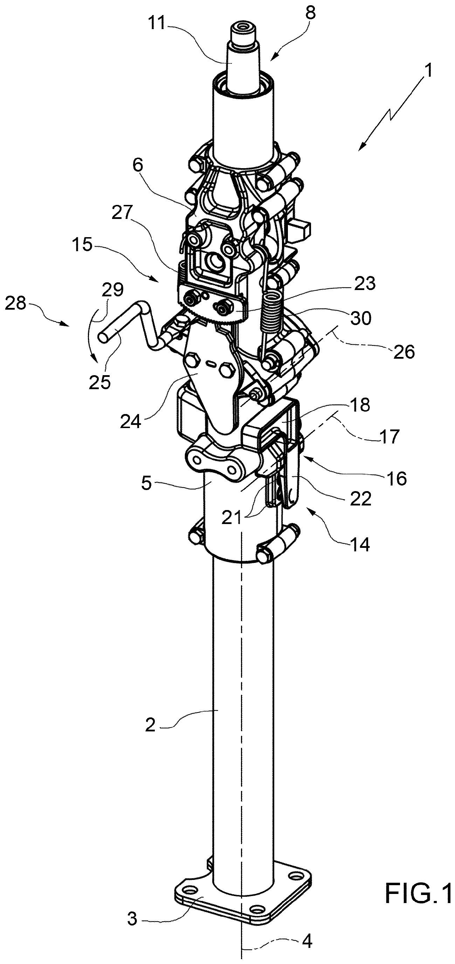

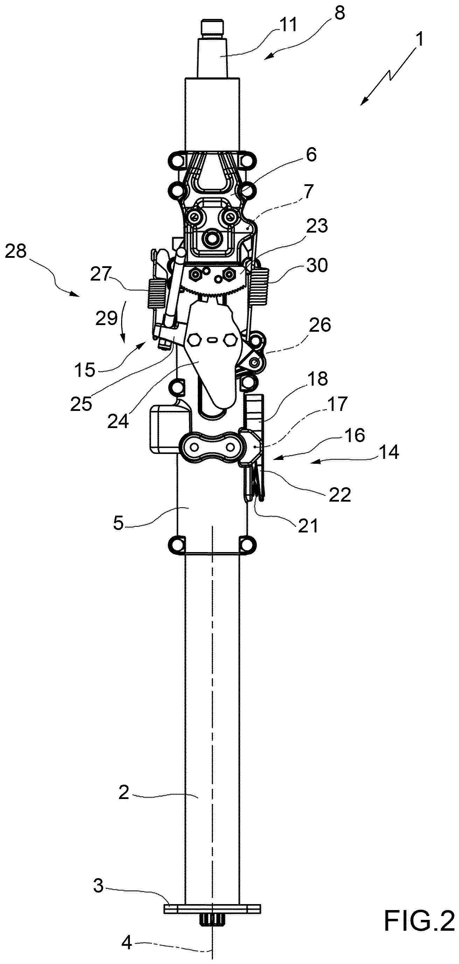

With reference to Figures 1 and 2, number 1 indicates, as a whole, a steering column for vehicles comprising a lower shaft 2 adapted to be connected to a chassis (not shown) of a vehicle (not shown) by interposing a coupling plate 3. The shaft 2 has a longitudinal axis 4 and is slidingly engaged by an intermediate shaft 5, which is coaxial to the axis 4, has a tubular shape and extends around the shaft 2. The steering column 1 further comprises an upper shaft 6 rotatably coupled to the shaft 5 to rotate, with respect to the shaft 5, around a rotation axis 7 transverse to the axis 4.

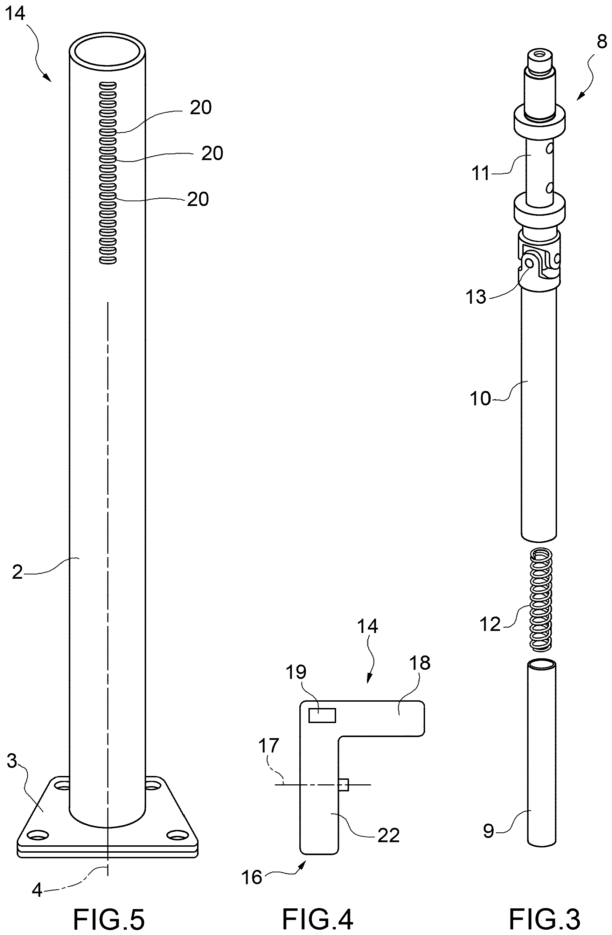

As shown in Figure 3, the steering column 1 has a drive shaft 8 which extends through the shafts 2, 5, 6, and comprises a bottom portion 9, an intermediate portion 10 and an upper portion 11 which are rotatably and axially fixed engaged to the shafts 2, 5, and, respectively, 6.

The portion 11 has an upper free end projecting outside the shaft 6 for housing and holding a steering wheel (not shown) of the vehicle (not shown).

The portions 9 and 10 are slidingly coupled by interposing a spring 12 mounted coaxially with the axis 4, while the portions 10 and 11 are coupled by means of a shaft coupling 13.

With reference to Figures 1 and 2, the steering column 1 further comprises a first locking device 14 for locking the shaft 5 along the axis 4, and a second locking device 15 for locking the shaft 6 around the axis 7.

The device 14 further comprises a rocker 16, which is hinged on the outer surface of the shaft 5 to oscillate, with respect to the shaft 5, about a fulcrum axis 17 which is substantially transverse to the axis 4.

As shown in Figures 1, 4 and 5, the rocker 16 has a first arm 18 provided with a tooth 19, which faces the shaft 5 and extends through a slot (not shown) formed through the shaft 5 transverse to the axis 4.

The device 14 further comprises a plurality of recesses 20, which are formed through the shaft 2 transverse to the axis 4, are mutually aligned parallel to the axis 4 and are shaped to house and hold the tooth 19.

The rocker 16 is moved, and usually kept, in a locking position in which the tooth 19 engages one of the recesses 20, by a pair of springs 21 interposed between the shaft 5 and a second arm 22 of the rocker 16.

With reference to Figures 1 and 2, the device 15 comprises two toothed sectors 23, 24, wherein the sector 23 is fixed on the outer surface of the shaft 6 and the sector 24 is fixed to a shaped crank 25 hinged to the shaft 5 to rotate, with respect to the shaft 5, around a fulcrum axis 26 which is parallel to the axis 7 and transverse to the axis 4.

The sector 24 is moved by the crank 25 about the axis 26 between a locking position, in which the sector 24 engages the sector 23 to lock the shaft 6 around the axis 7, and a release position, in which the sector 24 disengages the sector 23.

The sector 24 is moved, and usually kept in its locking position by a spring 27 interposed between the shaft 5 and the crank 25.

The springs 21, the crank 25 and the spring 27 define an operating device 28 to move the rocker 16 and the sector 24 between the relative locking and release positions.

To this regard, please note that the crank 25 is mounted to move about the axis 26 between a rest position, wherein the rocker 16 and the sector 24 are arranged in the respective locking positions, a first release position, in which the sector 24 disengages the sector 23 and is moved to its release position to adjust the orientation of the shaft 6 around the axis 7, and a second release position, in which the sector 24 engages the arm 18 of the rocker 16 to move it in its release position and to adjust the position of the shaft 5 along the axis 4.

The crank 25 is mounted to move in sequence from the rest position in the first release position and, then, in the second release position by moving about the axis 26 in a single forward direction 29 (counterclockwise in Figure 1). When the crank 25 is in its first release position, the shaft 6 and, therefore, said steering wheel (not shown) are further mobile in a rest position under the thrust of a spring 30 interposed between the shafts 5 and 6.

Since the direction 29 is oriented downwards and the two devices 14, 15 are released by moving downwards the crank 25, the crank 25 is connectable with an operating pedal (not shown) by interposing a traction cable (not shown), for example a Bowden cable.

The operating device 28 has, therefore, a relatively high versatility, and can be actuated by the operator either manually or through the aforesaid operating pedal.

## Claims

1. A steering column for vehicles comprising a lower shaft (2), which is configured to be connected to a chassis of a vehicle; an intermediate shaft (5), which is slidingly coupled to the lower shaft (2) to move along a longitudinal axis (4) of the lower shaft (2); an upper shaft (6), which supports a steering wheel of the vehicle and is rotatably coupled to the intermediate shaft (5) to rotate around a rotation axis (7); a first locking device (14) to lock the intermediate shaft (5) along the longitudinal axis (4); a second locking device (15) to lock the upper shaft (6) around the rotation axis (7); each locking device (14, 15) comprising a locking member (18, 24), which is mobile between a relative locking position and a relative release position; and an operating device (28) to move the locking members (18, 24) between the relative locking and release positions, the operating device (28) comprising a release crank (25) to move the locking members (18, 24) from the relative locking positions to the relative release positions; the release crank (25) being mounted so as to move among a rest position, a first release position to release one of the locking members (18, 24) and a second release position to release the other locking member (18, 24); the release crank (25) being mounted so as to move in sequence from the rest position to the first release position and then to the second release position in a single forward direction (29); and **characterized in that** the locking member (18) of the first locking device (14) is mounted inside a forward path of the release crank (25) in said forward direction (29); the movement of the release crank (25) from its first release position to its second release position causing the movement of the locking member (18) of the first locking device (14) to its release position.

2. A steering column according to claim 1, wherein the locking member (24) of the second locking device (15) is fixed to the release crank (25); the movement of the release crank (25) from its rest position to its first release position causing the movement of the locking member (24) of the second locking device (15) to its release position.

3. A steering column according to any of the previous claims and further comprising at least one first spring (27) to move, and usually keep, the release crank (25) in its rest position.

4. A steering column according to any of the previous claims, wherein the second locking device (15) comprises a first toothed sector (24), which is fixed to the release crank (25) to define the relative locking member (24) and move between the relative locking and release positions, and a second toothed sector (23), which is fixed to the upper shaft (6) to be coupled to the first toothed sector (24).

5. A steering column according to any of the previous claims, wherein the first locking device (14) comprises at least one tooth (18), which is mounted on the intermediate shaft (5) so as to define the relative locking member (18) and move between the relative locking and release positions, and a plurality of recesses (20) formed on the lower shaft (2) along said longitudinal axis (4) to house and hold the tooth (18).

6. A steering column according to claim 5, wherein the tooth (18) is hinged to the intermediate shaft (5) so as to move around a fulcrum axis (17), which is substantially parallel to the rotation axis (7), between the relative locking and release positions.

7. A steering column according to claim 6, wherein the first locking device (14) comprises at least one second spring (21) to move and usually keep the tooth (18) in its locking position.

8. A steering column according to any of the previous claims, wherein the release crank (25) is hinged to the intermediate shaft (5) so as to move around a further fulcrum axis (26), which is substantially parallel to the rotation axis (7), between its rest and release positions.

9. A steering column according to any of the previous claims and further comprising a drive shaft (8), which extends through the lower, intermediate and upper shafts (2, 5, 6) and comprises, in turn, a lower portion (9), an intermediate portion (10) and an upper portion (11) which are rotatably and axially fixed engaged through the lower shaft (2), the intermediate shaft (5) and the upper shaft (6), respectively.

10. A steering column according to claim 9, wherein the lower portion (9) and the intermediate portion (10) are slidingly coupled by interposing at least one third spring (12), and wherein the intermediate portion (10) and the upper portion (11) are coupled by interposing a shaft coupling (13) .

11. A steering column according to any of the previous claims, wherein the forward direction (29) of the release crank (25) from its rest position to its first release position and to its second release position is oriented downwards.

## Patentansprüche

1. Lenksäule für Fahrzeuge aufweisend eine untere Welle (2), die eingerichtet ist, mit einem Chassis eines Fahrzeugs verbunden zu werden; eine Zwischenwelle (5), die verschiebbar an die untere Welle (2) gekoppelt ist, um sich entlang einer Längsachse (4) der unteren Welle (2) zu bewegen; eine obere Welle (6), die ein Lenkrad des Fahrzeugs lagert und drehbar mit der Zwischenwelle (5) gekoppelt ist, um sich um die Drehachse (7) zu drehen; eine erste Sperrvorrichtung (14), um die Zwischenwelle (5) entlang der Längsachse (4) zu sperren; eine zweite Sperrvorrichtung (15), um die obere Welle (6) um die Drehachse (7) zu sperren; wobei jede Sperrvorrichtung (14, 15) ein Sperrelement (18, 24) aufweist, das zwischen einer relativen Sperrposition und einer relativen Freigabeposition bewegbar ist; und eine Betätigungsvorrichtung (28), um die Sperrelemente (18, 24) zwischen den relativen Sperr- und Freigabepositionen zu bewegen, wobei die Betätigungsvorrichtung (28) eine Freigabekurbelwelle (25) aufweist, um die Sperrelemente (18, 24) aus den relativen Sperrpositionen in die relativen Freigabepositionen zu bewegen; wobei die Freigabekurbelwelle (25) so montiert ist, dass sie zwischen einer Ruheposition, einer ersten Freigabeposition zur Freigabe von einem der Sperrelemente (18, 24) und einer zweiten Freigabeposition zur Freigabe des anderen Sperrelements (18, 24) bewegt wird; wobei die Freigabekurbelwelle (25) derart montiert ist, dass sie sich der Reihe nach von der Ruheposition in die erste Freigabeposition und dann in die zweite Freigabeposition in einer einzigen Vorwärtsrichtung (29) bewegt; und **dadurch gekennzeichnet ist, dass** das Sperrelement (18) der ersten Sperrvorrichtung (14) innerhalb eines Vorwärtspfads der Freigabekurbelwelle (25) in dieser Vorwärtsrichtung (29) montiert ist, wobei die Bewegung der Freigabekurbelwelle (25) aus ihrer ersten Freigabeposition in ihre zweite Freigabeposition die Bewegung des Sperrelements (18) der ersten Sperrvorrichtung (14) in dessen Freigabeposition bewirkt.

2. Lenksäule nach Anspruch 1, wobei das Sperrelement (24) des zweiten Sperrelements (24) der zweiten Sperrvorrichtung (15) an der Freigabekurbelwelle (25) befestigt ist; wobei die Bewegung der Freigabekurbelwelle (25) aus ihrer Ruheposition in ihre erste Freigabeposition die Bewegung des Sperrelements (24) der zweiten Sperrvorrichtung (15) in ihre Freigabeposition bewirkt.

3. Lenksäule nach einem der vorstehenden Ansprüche, und ferner aufweisend zumindest eine Feder (27), um die Freigabekurbelwelle (25) in ihre Ruheposition zu bewegen und dort normalerweise zu halten.

4. Lenksäule nach einem der vorstehenden Ansprüche, wobei die zweite Sperrvorrichtung (15) einen ersten Verzahnungsabschnitt (24), der an der Freigabekurbelwelle (25) befestigt ist, um das relative Sperrelement (24) zu definieren und zwischen den relativen Sperr- und Freigabepositionen zu bewegen, und einen zweiten Verzahnungsabschnitt (23) aufweist, der an der oberen Welle (6) befestigt ist, die an den ersten Verzahnungsabschnitt (24) gekoppelt werden soll.

5. Lenksäule nach einem der vorstehenden Ansprüche, wobei die erste Sperrvorrichtung (14) zumindest einen Zahn (18), der an der Zwischenwelle (5) montiert ist, um das relative Sperrelement (18) zu definieren und zwischen den relativen Sperr- und Freigabepositionen zu bewegen, und eine Vielzahl von Ausnehmungen (20) aufweist, die an der unteren Welle (2) entlang der Längsachse (4) ausgebildet sind, um den Zahn (18) aufzunehmen und zu halten.

6. Lenksäule nach Anspruch 5, wobei der Zahn (18) an der Zwischenwelle (5) angelenkt ist, so dass er sich zwischen den relativen Sperr- und Freigabepositionen um eine Gelenkpunktachse (17) bewegt, die im Wesentlichen parallel zu der Drehachse (7) ist.

7. Lenksäule nach Anspruch 6, wobei die erste Sperrvorrichtung (14) zumindest eine zweite Feder (21) aufweist, um den Zahn (18) in seine Sperrposition zu bewegen und normalerweise zu halten.

8. Lenksäule nach einem der vorstehenden Ansprüche, wobei die Freigabekurbelwelle (25) an der Zwischenwelle (5) angelenkt ist, so dass sie sich zwischen ihrer Ruhe- und Freigabeposition um eine weitere Gelenkpunktachse (26) bewegt, die im Wesentlichen parallel zu der Drehachse (7) ist.

9. Lenksäule nach einem der vorstehenden Ansprüche, und ferner aufweisend eine Antriebswelle (8), die sich durch die untere, Zwischen- und obere Welle (2, 5, 6) erstreckt und wiederum einen unteren Teil (9), einen Zwischenteil (10), und einen oberen Teil (11) aufweist, die drehbar und axial-fest durch die untere Welle (2), die Zwischenwelle (5), und die obere Welle (6) in Eingriff stehen.

10. Lenksäule nach Anspruch 9, wobei der untere Teil (9) und der Zwischenteil (10) durch Zwischenschalten zumindest einer dritten Feder (12) verschiebbar gekoppelt sind, und wobei der Zwischenteil (10) und der obere Teil (11) durch Zwischenschalten einer Wellenkopplung (13) gekoppelt sind.

11. Lenksäule nach einem der vorstehenden Ansprüche, wobei die Vorwärtsrichtung (29) der Freigabekurbelwelle (25) aus ihrer Ruheposition in ihre erste Freigabeposition und ihre zweite Freigabeposition nach unten gerichtet ist.

## Revendications

1. Colonne de direction pour véhicules comprenant un arbre inférieur (2), qui est configuré pour être connecté à un châssis de véhicule; un arbre intermédiaire (5), qui est couplé de manière coulissante à l'arbre inférieur (2) pour se déplacer le long d'un axe longitudinal (4) de l'arbre inférieur (2); un arbre supérieur (6), qui supporte un volant du véhicule et est couplé de manière rotative à l'arbre intermédiaire (5) pour tourner autour d'un axe de rotation (7); un premier dispositif de verrouillage (14) pour verrouiller l'arbre intermédiaire (5) le long de l'axe longitudinal (4); un second dispositif de verrouillage (15) pour verrouiller l'arbre supérieur (6) autour de l'axe de rotation (7); chaque dispositif de verrouillage (14, 15) comprenant un élément de verrouillage (18, 24), qui est mobile entre une position de verrouillage correspondante et une position de déverrouillage correspondante; et un dispositif de commande (28) permettant de déplacer les éléments de verrouillage (18, 24) entre les positions de verrouillage et de déverrouillage, le dispositif de commande (28) comprenant une manivelle de déverrouillage (25) pour déplacer les éléments de verrouillage (18, 24) des positions correspondantes de verrouillage à déverrouillage; la manivelle de déverrouillage (25) étant montée de manière à pouvoir se déplacer dans une position de repos, une première position de déverrouillage pour déverrouiller l'un des éléments de verrouillage (18, 24) et une seconde position de déverrouillage pour déverrouiller l'autre élément de verrouillage (18, 24) ; la manivelle de déverrouillage (25) étant montée de manière à se déplacer en séquence de la position de repos à la première position de déverrouillage puis à la seconde position de déverrouillage dans une seule direction avant (29) ; et **caractérisée en ce que** l'élément de verrouillage (18) du premier dispositif de verrouillage (14) est monté à l'intérieur d'un trajet en avant de la manivelle de déverrouillage (25) dans le sens avant (29); le mouvement de la manivelle de déverrouillage (25) de sa première position de déverrouillage à sa seconde position de déverrouillage entraînant le déplacement de l'élément de verrouillage (18) du premier dispositif de verrouillage (14) vers sa position de déverrouillage.

2. Colonne de direction selon la revendication 1, dans laquelle l'élément de verrouillage (24) du second dispositif de verrouillage (15) est fixé à la manivelle de déverrouillage (25); le mouvement de la manivelle de déverrouillage (25) de sa position de repos à sa première position de déverrouillage provoquant le déplacement de l'élément de verrouillage (24) du seconde dispositif de verrouillage (15) vers sa position de déverrouillage.

3. Colonne de direction selon l'une quelconque des revendications précédentes et comprenant en outre au moins un premier ressort (27) pour déplacer, et habituellement maintenir, la manivelle de déverrouillage (25) dans sa position de repos.

4. Colonne de direction selon l'une quelconque des revendications précédentes, dans laquelle le second dispositif de verrouillage (15) comprend un premier secteur denté (24), qui est fixé à la manivelle de déverrouillage (25) pour définir l'élément de verrouillage correspondant (24) et se déplacer entre les positions correspondantes de verrouillage et de déverrouillage, et un second secteur denté (23), qui est fixé à l'arbre supérieur (6) pour être couplé au premier secteur denté (24).

5. Colonne de direction selon l'une quelconque des revendications précédentes, dans laquelle le premier dispositif de verrouillage (14) comprend au moins une dent (18), qui est montée sur l'arbre intermédiaire (5) de manière à définir l'élément de verrouillage correspondant (18) et se déplacer entre les positions correspondantes de verrouillage et de déverrouillage, et une pluralité d'évidements (20) formés sur l'arbre inférieur (2) le long dudit axe longitudinal (4) pour loger et maintenir la dent (18).

6. Colonne de direction selon la revendication 5, dans laquelle la dent (18) est articulée sur l'arbre intermédiaire (5) de manière à se déplacer autour d'un axe de pivot (17), qui est sensiblement parallèle à l'axe de rotation (7), entre les positions correspondantes de verrouillage et de déverrouillage.

7. Colonne de direction selon la revendication 6, dans laquelle le premier dispositif de verrouillage (14) comprend au moins un seconde ressort (21) pour déplacer et maintenir habituellement la dent (18) dans sa position de verrouillage.

8. Colonne de direction selon l'une quelconque des revendications précédentes, dans laquelle la manivelle de déverrouillage (25) est articulée sur l'arbre intermédiaire (5) de manière à se déplacer autour d'un autre axe de pivot (26), qui est sensiblement parallèle à l'axe de rotation (7), entre ses positions de repos et de déverrouillage.

9. Colonne de direction selon l'une quelconque des revendications précédentes et comprenant en outre un arbre d'entraînement (8), qui s'étend à travers les arbres inférieur, intermédiaire et supérieur (2, 5, 6) et comprend, à son tour, une partie inférieure (9), une partie intermédiaire (10) et une partie supérieure (11) qui sont engagées en étant fixées de manière rotative et axiale respectivement à travers l'arbre inférieur (2), l'arbre intermédiaire (5) et l'arbre supérieur (6).

10. Colonne de direction selon la revendication 9, dans laquelle la partie inférieure (9) et la partie intermédiaire (10) sont couplées de manière coulissante en interposant au moins un troisième ressort (12), et dans laquelle la partie intermédiaire (10) et la partie supérieure (11)) sont couplées en interposant un accouplement d'arbre (13).

11. Colonne de direction selon l'une quelconque des revendications précédentes, dans laquelle le sens avant (29) de la manivelle de déverrouillage (25) de sa position de repos à sa première position de déverrouillage et à sa seconde position de déverrouillage est orienté vers le bas.
